Europäisches Patentamt

European Patent Office

Office européen des brevets

(11) Publication number: **0 146 255**
A2

# EUROPEAN PATENT APPLICATION

(21) Application number: 84307695.1

(22) Date of filing: 07.11.84

(51) Int. Cl.⁴: **C 09 D 5/22**

(30) Priority: 07.12.83 US 559150

(43) Date of publication of application: 26.06.85
**Bulletin 85/26**

(84) Designated Contracting States: **DE FR GB IT NL**

(71) Applicant: **FILTROL CORPORATION, 300 Lakeside Drive, USA-Oakland, California 94643 (US)**

(72) Inventor: **Utts, Bradley Kramer, 25504 Garden Road, Oakwood Village Ohio 44146 (US)**
Inventor: **Wimer, Oley Dulaney, 227 West Streetsboro Road, Hudson Ohio 44236 (US)**

(74) Representative: **Oliver, Roy Edward et al, POLLAK MERCER & TENCH High Holborn House 52-54 High Holborn, London WC1V 6RY (GB)**

(54) **Formable light-reflective compositions.**

(57) A light-reflective flowable and curable composition comprises a resin containing light-reflective solid particles in an amount and of average particle size sufficient to provide the desired light reflectance/transmittance characteristics to the cured composition. Preferably, the composition is self-levelling and the solid particles comprise magnesium oxide, barium sulphate, aluminium oxide or mixtures thereof. The compositions of the invention are useful as reflective coatings in various applications, such as for radiation detector devices including scintillator crystals. For instance, a scintillator crystal block (1), mounted on a base (4) within a housing (7), has channels or grooves (3) separating it into elements (2) and these are optically isolated from one another by means of the light-reflective curable composition.

- 1 -

FORMABLE LIGHT-REFLECTIVE COMPOSITIONS

The present invention relates to light-reflective curable compositions and is concerned, more particularly, with such compositions comprising a resin containing light-reflective solid particles. Compositions of this kind are useful as reflective coatings in various uses, such as coatings for scintillator crystals.

Radiation detectors have many applications and are particularly useful in the medical field, for instance in apparatus such as the gamma camera and X-ray (or gamma ray) image intensifiers. The forms of radiation involved include gamma rays, X-rays and high energy nuclear particles, such as electrons, protons and neutrons.

One type of radiation detector utilized in such devices is based on scintillator crystals combined with photo-multiplier tubes. In use, the scintillator crystals convert the invisible radiation to visible light. The light-sensitive photomultiplier tubes convert this light to electrical signals. Desirable objectives when designing and utilizing scintillator crystals are to ensure that the crystals have maximum sensitivity to the incoming radiation and that the light photons are concentrated, i.e. guided efficiently in the crystals and so eventually pass out of the scintillator crystals at the highest possible intensity level.

The present invention relates to light-reflective curable compositions, which can be utilized as reflective coatings on, for example, scintillator crystals, so as to provide the coated crystals with controlled reflectance/transmittance characteristics.

According to one aspect of the invention, a light-reflective composition is flowable and contains light-reflective solid particles in an amount and of an average particle size sufficient, on curing, to provide the resultant cured composition with the desired light reflectance/transmittance characteristics.

Preferably, the curable compositions of the invention are capable of plastic flow and, more preferably, the flowable compositions are self-levelling under conditions of use.

Another aspect of this invention is a scintillator crystal which is partially coated with a curable (or cured) composition according to the invention.

The invention also consists in a plurality of scintillator crystal elements, partially coated with the curable (or cured) composition of the invention, so as to provide optical isolation of one element from another.

Where the light-reflective curable compositions of the invention should desirably provide coatings which reflect substantially all of the incident light photons, the compositions preferably contain higher concentrations of the light-reflective solid particles. In general, such compositions may contain, by weight, 1 to 75 parts of the light-reflective solid particles per 100 parts of the resin. When it is desired to prepare a light-reflective cured composition characterized by a lower reflectance value, i.e. a greater transmittance value, lesser amounts of the solid particles can be utilized and such compositions may comprise 1% to 70% by weight of the light-reflective solid particles per 100 parts by weight of the resin.

In conjunction with the amount of light-reflective solid particles, included in the resin compositions, a second important factor is the particle size or particle size distribution of the solid particles. It is generally believed that, in order to provide maximum reflectance, the particle size distribution of the solid particles within the resin should be sufficient to provide substantially total resistance to the transmittance of any light photons through the cured resin composition. Optimally, to provide compositions having such a high reflectance, the amount and particle size distribution of the light-reflective solid compounds within the resin should be sufficient to provide substantially particle-to-particle contact of the solid compounds throughout the resin, any spaces between larger particles being occupied by smaller particles of the same or a different light-reflective material.

The relative amount of light-reflective solid particles included in the resin and the particle size distribution of such particles to be used in any particular composition, to provide compositions having the desired reflectance/transmittance characteristics, can be determined readily by those skilled in the art. Generally, it has been found that the reflectance/transmittance characteristics desired can be achieved by utilizing light-reflective solid particles comprising a mixture of particles, preferably ranging in size from $1 \times 10^{-9}$ to $2 \times 10^{-5}$ mm (0.001 to 20 microns) and most preferably from $1 \times 10^{-8}$ to $5 \times 10^{-6}$ mm (0.01 to 5 microns).

A variety of resins may be utilized in the compositions of the invention, provided the mixtures of resin and light-reflective solid particles are formable prior to curing. The term "resin" as used herein includes elastomers (rubbers) having the desired characteristics. Examples of resins which can be utilized include polyvinyl chlorides, polyurethanes, polyesters, polyamides, polyacrylates, butadienestyrene copolymers and natural rubber. Preferred resins are those which are flowable and self-levelling in the uncured state. The cured or set forms of the light-reflective compositions of the invention can range from soft flexible rubber-like materials to hard solids, depending upon the intended use. Particularly preferred resins are room-temperature curing silicone polymers. A variety of silicone rubber gum stocks are available commercially from the Dow Corning Corporation under the general trade names "Silastic" and "Sylgard". These resins are dimethyl-polysiloxanes with vinyl, phenyl, methyl and trifluoropropyl groups attached thereto to modify the properties of the gums. Recommended curing agents for such silicones include peroxides, such as benzoyl peroxide, dicumyl peroxide and di-tert-butyl peroxide.

Room-temperature vulcanizing silicone rubber compounds which are liquids or pastes and which cure, upon the addition of a curing agent, to give strong durable resilient rubber-like materials are available from the Silicon Products Department of General Electric under the general trade designation "RTV Silicon Rubber". These silicone rubbers also are of the methyl-phenyl type. Suitable curing agents include tin octoate, dibutyl tin dilaurate and lead octoate.

A variety of light-reflective solid particles and mixtures of solid materials can be utilized in the compositions of the invention, but the selection of particular solid materials generally depends upon the intended end-uses of the compositions. For example, where the light-reflective compositions of the invention are to be used in environments which are sensitive to moisture, non-hygroscopic solid particles should be selected. Examples of light-reflective solid particles which can be utilized include magnesium oxide, barium sulphate, aluminium oxide, silicon oxide and mixtures thereof.

In some instances, in order to form compositions having reduced light reflectance, but little or no transmittance, the compositions of the invention also may contain light-absorbing particles, such as carbon particles, which are mixed with the light-reflective particles. The amount of light-absorbent particles contained in the resin may be as high as 10% by weight or more.

Particularly preferred light-reflective solid particles useful in the composition of the invention are those of magnesium oxide, barium sulphate, aluminium oxide and mixtures thereof. These materials can be prepared dry and are highly light-reflective substances. As mentioned above, the particle size distribution of the materials incorporated in the compositions of the invention should advantageously be within the range from $1 \times 10^{-9}$ to $2 \times 10^{-5}$mm (0.001 to 20 microns) in diameter. Preferably, the particles utilized in preparing the compositions of the invention comprise a mixture of different size particles. In one embodiment, a useful mixture of aluminium oxide particles comprises a mixture of (a) particles having an average particle size of about $3 \times 10^{-6}$mm (3 microns) and (b) particles having an average particle size of about $3 \times 10^{-8}$mm (0.03 microns). More specifically, a useful mixture comprises 10 to 20 parts of the 3 micron particles and 1 to 10 parts of the 0.03 micron particles of aluminium oxide per 100 parts of resin. As mentioned above, the selection of the particular particle sizes and amounts of the particles incorporated into the resin compositions can be varied, depending upon the desired characteristics of the light-reflective composition which is formed.

The following examples illustrate the formulation and preparation of light-reflective compositions according to the invention. Unless otherwise indicated all parts and percentages in the following examples and in this specification are by weight.

### EXAMPLE 1

| | Parts |
|---|---|
| RTV 655A, silicone resin from General Electric | 30 |
| RTV 655B, silicone catalyst General Electric | 3 |
| Aluminium oxide. $3 \times 10^{-6}$ mm (3 micron) avg. | 15 |
| Aluminium oxide. $3 \times 10^{-8}$ mm (0.03 micron) avg. | 5 |

The silicone resin is mixed thoroughly with the catalyst and then the aluminium oxide powders are added and thoroughly mixed in. The mixing is continued for a period of about 1 to 5 minutes until the mixture becomes totally paste-like and wet. Air bubbles are removed by pumping down the mixture under vacuum. The composition is then maintained in a dry box. This composition is a flowable self-levelling light-reflective compound.

### EXAMPLE 2

| | |
|---|---|
| RTV 655A resin | 40 grams |
| RTV 655B, catalyst | 3 grams |
| Aluminium oxide. $3 \times 10^{-6}$ mm (3 micron) avg. | 16 grams |

The mixing procedure described in Example 1 is also utilized in this example. The product of this example also is a flowable self-levelling light-reflective composition.

### EXAMPLE 3

| | |
|---|---|
| RTV 655A resin | 40 grams |
| RTV 655B, catalyst | 3 grams |
| Aluminium oxide. $3 \times 10^{-6}$ mm | |
| (3 micron) avg. | 12 grams |

The mixing procedure of Example 1 is repeated. The product of this example is a flowable self-levelling light-reflective composition.

### EXAMPLE 4

| | |
|---|---|
| RTV 670 resin | 40 grams |
| RTV 670 catalyst | 3 grams |
| Aluminium oxide. $3 \times 10^{-6}$ mm | |
| (3 micron) avg. | 6 grams |

The light-reflective properties of the compositions of the invention as illustrated in the above examples can be determined in the following manner. A 25 mm x 25 mm (1" x 1") sodium iodide crystal is placed in direct contact with a photomultiplier tube. The sides of the sodium iodide crystal not in contact with the photomultiplier tube are covered with aluminium. The crystal is subjected to gamma rays from a caesium 137 source. The crystal converts the gamma rays to light photons which are detected by the photomultiplier tube, and the intensity is observed through appropriate electronic circuitry on a display screen. The pulse height on the display screen is observed and recorded. In this controlled experiment, without the light-reflective compositions of the invention, the pulse height which is observed represents a transmission of 100% or a light-reflectance of 0%.

The light-reflective/transmittance properties, of the compositions of the invention are then measured by inserting between the sodium iodide crystal and the photomultiplier tube samples of cured compositions of the invention of known thickness. The above procedure, that is, subjecting the sodium iodide crystal to gamma rays from a caesium 137 source, is repeated and the pulse height shown on the display screen is measured and recorded. The decrease in the pulse height which results when compositions of the invention are placed between the sodium iodide crystal and the photomultiplier tube is an indication of the amount of light which is not transmitted through the sample, but in fact reflected by the sample. The results obtained from several experiments with the compositions of Examples 1 to 4 are summarized in the following Table, in which Samples 1-4 are the cured compositions of Examples 1-4 respectively.

### TABLE
#### Reflectance/Transmittance Properties.

| Sample | Thickness | | $Al_2O_3$/Resin | Trans. | Reduction |
|--------|-----------|------|-----------------|--------|-----------|
| | mm | inch | (wt. ratio) | (%) | (%)* |
| Control | -- | -- | -- | 100% | -- |
| 1 | 2.032 | 0.080 | 0.61 | 4.0 | 96 |
| 2 | 1.626 | 0.064 | 0.37 | 7.5 | 92.5 |
| 3 | 1.626 | 0.064 | 0.28 | 11.5 | 88.5 |
| 4 | 1.626 | 0.064 | 0.19 | 26.7 | 73.3 |

* Measure of reflectance.

The light-reflective formable and curable compositions of this invention are useful as reflective coatings for scintillator crystals, such as sodium iodide, caesium fluoride, caesium iodide, barium fluoride and calcium fluoride. The crystals may be doped with known dopants, such as thallium, caesium and others. The light-reflective compositions of the invention are also useful for treating other devices requiring optical reflectance, where short cure times, controllability of light reflectance/transmittance and non-hygroscopicity are required or desired. As mentioned above, the compositions of the invention may be designed and prepared to serve for uses where optical isolation or controlled optical separation is required.

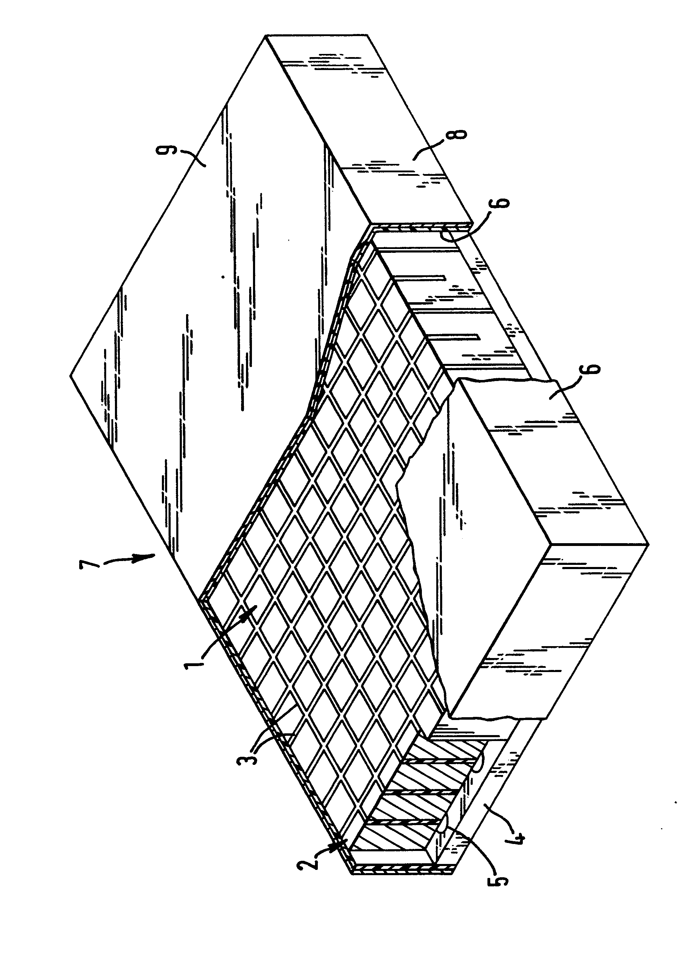

The accompanying drawing is a cut-away perspective view of a scintillator crystal orthogonal array detector having a coating of a light-reflective composition of the invention over the crystals. The drawing shows a particularly useful and beneficial application of the compositions of the invention. In the drawing, a scintillator crystal block 1 is mounted on a metal base 4 and contained within a light-reflective housing 7 having an aluminium top. Such an array can be used as a detector in a nuclear medicine imaging device. The device is useful, for example, for locating gamma radiation emitted from a patient. In this embodiment, channels or grooves 3 have been made in the block 1 by sawing the crystal in an orthogonal fashion, thereby resulting in the formation of multiple rectangular elements 2 separated from one another by the channels 3. The various individual elements 2 within the crystal array can be optically isolated from one another through the use of the light-reflective compositions of the invention. Utilizing a composition of the present invention which is flowable and self-levelling, such as the compositions of Examples 1-4, the composition is poured on to the crystal array and forms a coating 6 on the elements 2 and permeates into the channels 3 between the individual elements, so filling the channels 3 and providing the desired optical isolation or controlled optical separation between the elements 2 as required. In the drawing, the light-reflective coating 6 is shown cut away, even though in practice it covers all of the crystal elements 2.

In a device as illustrated in the drawing and described above, incoming gamma radiation causes a scintillation event in one of the elements 2 of the array or matrix.   By detecting the light emitted from the scintillation event, the relevant element 2 of the matrix can then be determined and, therefore, the position at which the event occurred.

The coating 6 produced by the composition of the invention reflects the light produced in the individual elements 2 of the array.  The optical properties of the coating 6 are such as to prevent light from being transmitted from one element 2 to another.  This is desirable because the ability of the device to image accurately would be degraded if some of the light produced in the individual elements 2 could be transmitted from one element 2 to another.

When the resin utilized in the preparation of the composition of the invention is a room-temperature curable resin, such as General Electric's RTV 655A, the composition within the channels 3 can be cured easily at about room temperature in a short period of time, e.g. up to 24 hours.  At temperatures above room temperature, the curing of the composition is accelerated.

As shown in the drawing, the crystal 1 is mounted on a mask or light pipe containing circular openings 5 which permit the light emitted by the individual crystal elements 2 to pass downwardly, whereby such light can be detected by, for example, a photomultiplier tube (not shown).  The entire crystal array is contained in a closed housing 7 comprising the base 4, sides 8 and a top 9, which is aluminium or some other material transparent to gamma rays.

The preparation of the coated crystal array illustrated in the drawing is accomplished in the following manner, when the crystal is a moisture-sensitive material, such as a sodium iodide (thallium) crystal.  The crystal is mounted on a mask and the base 4 (of the eventual closed housing 7), while the crystal 1 is kept in a dry box. The crystal 1 is then cut into the rectangular elements 2 as illustrated, using a saw, while cooling the crystal 1 with an anhydrous lubricant such as a silicone oil. While still in the dry box, the crystal 1 and the base 4 are placed in a tray and the sides 8 are added to the base 4. The container formed by the base 4 and the sides 8 is filled with an anhydrous liquid, such as silicone oil, to a level sufficient to cover the crystal 1 and the crystal 1 and the container are transferred to another dry box, where the crystal elements 2 are coated with the composition of the invention, as follows. A composition prepared such as described in Example 1 is poured over the crystal 1. Since the composition is flowable and self-levelling, it flows over all of the crystal sections or elements 2 and into the channels 3, displacing the cooling oil and thoroughly filling the channels 3. Any entrapped gas migrates to the surface, thereby leaving a continuous film or coating substantially free from bubbles and imperfections. The composition is then cured by allowing the entire assembly to set for up to 24 hours at room temperature.

When the compositions of the invention are utilized in the manner shown in the drawing and described above, the scintillator crystal array which is obtained exhibits highly desirable levels of optical isolation between the individual crystal elements 2. When gamma rays penetrate the aluminium top 9 and the light-reflective coating 6, which are both transparent to gamma rays, the gamma rays are converted to light photons within the crystal sections or elements and the only path along which the light photons can travel is downwardly, through the openings 5 in the base 4, where the light can be detected and measured by photomultiplier tubes (not shown). Devices similar to that shown in the drawing have been studied in order to determine the amount of light transmitted from one section or element to another, and this transmittance has been found to be very low with a compound similar to the product of Example 1.

One significant result of the use of crystal arrays and the compositions of the invention as illustrated in the drawing is that large numbers of individual scintillator crystals can be replaced by a single smaller crystal which is partitioned and treated in accordance with the procedure described above. Consequently, the size of equipment utilizing multiple scintillator crystals can be significantly reduced and equipment which has heretofore been large, cumbersome and non-portable can now be produced in a size which is significantly reduced, thereby allowing the construction and use of equipment which is mobile and easily transported.

CLAIMS:

1. A light-reflective, formable and curable resin composition,

characterized in that

it is flowable and contains light-reflective solid particles in an amount and of an average particle size sufficient, on curing, to provide the resultant cured composition with the desired light reflectance/transmittance characteristics.

2. A composition according to claim 1, which is self-levelling.

3. A composition according to claim 1 or 2, which comprises a silicone resin.

4. A composition according to any preceding claim, wherein the particles comprise magnesium oxide, barium sulphate, aluminium oxide or mixtures thereof.

5. A composition according to any preceding claim, wherein the particles comprise a mixture having different particle sizes.

6. A composition according to any preceding claim, wherein the particles have sizes in the range from $1 \times 10^{-9}$ to $2 \times 10^{-5}$mm (0.001 to 20 microns) in diameter.

7. A composition according to claim 6, wherein the particles have sizes in the range from $1 \times 10^{-8}$ to $5 \times 10^{-6}$mm (0.01 to 5 microns) in diameter.

8. A composition according to any preceding claim, containing, by weight, 1 to 75 parts of the particles per 100 parts of the resin.

9. A composition according to any preceding claim, which comprises aluminium oxide particles comprising a mixture of (a) particles having an average particle size of about $3 \times 10^{-6}$mm (3 microns) and (b) particles having an average particle size of about $3 \times 10^{-8}$mm (0.03 microns).

10. A composition according to claim 9, which comprises, by weight, 10 to 20 parts of the $3 \times 10^{-6}$ mm (3 micron) particles and 1 to 10 parts of the $3 \times 10^{-8}$ mm (0.03 micron) particles in 100 parts of resin.

11. A composition according to any preceding claim, which contains, by weight, up to 10% of carbon particles.

12. A scintillator crystal, partially coated with a composition as defined in any preceding claim.

13. A plurality of scintillator crystal elements, which are partially coated with a composition as defined in any preceding claim, so as to provide optical isolation of one element from another.

0146255